# FASCICULE DE BREVET EUROPEEN

(11) **EP 0 946 375 B1**
(45) Date de publication et mention de la délivrance du brevet: **20.03.2002**
(21) Numéro de dépôt: 97950153.3
(22) Date de dépôt: 10.11.1997
(51) Int. Cl.: B60C 17/01, B60C 5/22

(54) **MEMBRANE DE SOUTIEN DE BANDE DE ROULEMENT**
TRÄGERMEMBRAN FÜR REIFENLAUFFLÄCHE
SUPPORTING MEMBRANE FOR TYRE TREAD

(30) Priorité: 27.11.1996 FR 9614631
(43) Date de publication de la demande: 06.10.1999
(73) Titulaire: Compagnie Générale des Etablissements MICHELIN-MICHELIN & CIE, 63040 Clermont-Ferrand Cedex 09 (FR)
(72) Inventeur: RIVATON, Renaud, F-63112 Blanzat (FR)
(74) Mandataire: Devaux, Edmond-Yves
(86) Numéro de dépôt international: EP9706237
(87) Numéro de publication internationale: WO9823457

(56) Documents cités:
- AU-B- 539 570
- DE-A- 2 448 315
- GB-A- 679 642
- US-A- 2 253 746
- US-A- 3 885 614

## Description

La présente invention concerne un ensemble roulant pour véhicules, ensemble destiné à pouvoir rouler après une perte de pression conséquente et inattendue du pneumatique de l'ensemble, ledit pneumatique étant plus particulièrement soit un pneumatique sans chambre de type Poids-Lourd, soit un pneumatique pour véhicule de tourisme, le rapport de forme H/B étant généralement au plus égal à 0,8 dans les deux cas. Ledit ensemble, outre le pneumatique et la jante de montage, comprend un moyen de support de la bande de roulement du pneumatique lorsqu'il y a perte de pression. L'invention concerne aussi ledit moyen de support.

Bien que les pneumatiques à armature de carcasse radiale et armature de sommet soient de moins en moins sujets à un dégonflement lent ou rapide, et à une mise à plat, quelle que soit la(les) cause(s) de ladite mise à plat, il n'en reste pas moins vrai que les accidents existent encore et qu'une perte de pression peut entraîner de nombreux inconvénients, selon la position du pneumatique sur le véhicule et selon la rapidité du dégonflement. Les inconvénients les plus répandus restent la perte de contrôle du véhicule, le remplacement du pneumatique dans des conditions qui ne sont pas toujours les plus appropriées, et pratiquement dans tous les cas une dégradation des propriétés du pneumatique, dégradation partielle ou totale.

De nombreuses propositions ont été faites pour obtenir un ensemble roulant pouvant rouler malgré la perte de pression du pneumatique de l'ensemble, et il serait fastidieux d'énumérer tous les demandes de brevets et/ou brevets relatifs au problème posé. Nous ne citerons que les moyens usuels et universellement connus pour résoudre ledit problème.

Ainsi un anneau de soutien de bande de roulement, qui peut être en une seule partie ou en plusieurs parties, soit constitué d'un seul matériau, en général métallique, soit constitué de deux matériaux, métal et caoutchouc, pouvant être de différentes formes géométriques, est inséré dans la cavité pneumatique, de manière à ce que la paroi intérieure du sommet du pneumatique puisse prendre contact avec la paroi radialement supérieure de l'anneau de soutien. Un tel exemple d'anneau de soutien est décrit dans la demande française FR 2 707 923.

Il est aussi possible d'utiliser des anneaux en mousse ou matériau cellulaire, qui occupe dans les conditions normales de pression du pneumatique un certain volume de la cavité pneumatique, et qui se dilate, lorsque la pression interne décroît, jusqu'à occuper le volume total de ladite cavité.

Une autre solution consiste à insérer dans la cavité intérieure du pneumatique un deuxième pneumatique dit intérieur, et ayant une structure comparable à celle du premier pneumatique. Le pneumatique intérieur, de plus petites dimensions, est alors gonflé à une pression supérieure à la pression existante dans la cavité intérieure du premier pneumatique, ou du moins dans l'espace libre entre la paroi intérieure du pneumatique extérieur et la paroi extérieure du pneumatique intérieur, de manière à ce que le pneumatique extérieur vienne s'appuyer sur le pneumatique intérieur en cas de dégonflement du pneumatique extérieur. Le brevet JP 77/049604, correspondant au préambule de la revendication 1, décrit un tel pneumatique intérieur.

Quelle que soit la solution adoptée, elle présente des inconvénients : un anneau de soutien de bande de roulement métallique ou en deux matériaux est coûteux, lourd, et difficile à manipuler malgré sa faible hauteur, comparée à celle du pneumatique dans lequel il est inséré. Il ne permet pas au pneumatique de l'ensemble de rouler, après dégonflement, sous une flèche compatible avec une bonne résistance à la dégradation interne du pneumatique. Il en est de même des pneumatiques intérieurs, quoique moins lourds, mais tout aussi difficilement maniables du fait de leur unité. Quant aux anneaux de mousse ou matériau cellulaire, ils ne peuvent être utilisés pour toutes les dimensions de pneumatique, car pénalisant trop fortement le prix de revient de l'ensemble roulant, tout en ne présentant aucun avantage particulier du point de vue montage et manipulation par rapport à l'utilisation d'un pneumatique intérieur. Bien au contraire, l'accroissement de l'échauffement intérieur du pneumatique dû à la présence d'un "boudin mousse" interdit pratiquement son emploi dans un pneumatique de grandes dimensions.

Afin de pouvoir utiliser un ensemble roulant, formé d'un pneumatique extérieur monté sur sa jante de service, et d'un moyen de soutien de la bande de roulement dudit pneumatique, lorsque ce dernier est sujet à un dégonflement, ledit moyen permettant d'atténuer voire de supprimer les inconvénients induits par les dispositifs connus cités ci-dessus, l'invention propose l'utilisation, en tant que moyen de support ou de soutien de bande de roulement, d'une membrane torique en caoutchouc renforcé, gonflée à une pression p₀ supérieure à la pression p₁ de la cavité du pneumatique, et ayant, à l'état gonflé, un rayon de sommet R_{M} inférieur au rayon écrasé R_{E} du pneumatique utilisé à sa pression recommandée, ladite membrane étant au moins en son sommet renforcée par une armature de sommet formée d'au moins une nappe de fils ou câbles parallèles entre eux dans chaque nappe et faisant avec la direction circonférentielle un angle α tel que 50° ≤ α ≤ 90°, ledit sommet de ladite membrane comprenant en outre une armature de frettage composée d'au moins une nappe de fils ou câbles orientés circonférentiellement et présentant une force de rupture par cm de nappe d'une part au moins égale au produit du rayon de sommet R_{M} par la pression, par cm² de surface de ladite nappe, conduisant à une tension par cm de nappe équivalente à la tension due à la force centrifuge maximale à laquelle peut être soumis le pneumatique, d'autre part au plus égale au rayon de sommet de ladite nappe par la pression p₁.de sorte que les fils ou câbles se rompent lorsque la différence de pression p₀ - p₁ croît suite à la décroissance de P₁.

La force de rupture par cm de nappe, mesurée perpendiculairement aux fils ou câbles circonférentiels de la nappe sera préférentiellement le produit du rayon de sommet R_{M1} de ladite nappe par une fonction linéaire de la pression de gonflage p₁ du pneumatique, dont le coefficient angulaire est compris entre 0,05 et 0,5 et l'ordonnée à l'origine est précisément la pression correspondante à la force centrifuge maximale. Par exemple, pour la gamme de pneumatiques dits "Poids-Lourds", cette pression est choisie égale à 0,3.10⁵ Pa, alors que pour la gamme de pneumatiques de véhicules de tourisme cette pression sera de 1,2.10⁵ Pa.

La membrane torique peut être fermée ou ouverte. Elle est dite fermée lorsque sa section transversale présente un contour continu, c'est à dire ressemblant à une section de chambre à air gonflée ; elle est dite ouverte si le contour de sa section transversale est discontinu, par exemple lorsque les flancs de ladite membrane ont des extrémités jointes par un moyen approprié aux bourrelets du pneumatique dans lequel est insérée ladite membrane.

La pression intérieure p₀ de ladite membrane, mesurée à froid, c'est-à-dire à 20° C, est supérieure à la pression p₁ de la cavité interne du pneumatique d'une quantité généralement comprise entre 0,5.10⁵ Pa et 5,0.10⁵ Pa, selon les dimensions de pneumatique concernées. Etant donné que le rayon sommet R_{M} de la membrane torique est préférentiellement compris entre 0,80 et 0,95 fois le rayon écrasé R_{E} du pneumatique, principalement pour des raisons d'échauffement dudit pneumatique, une différence de pression trop forte risque d'altérer un certain nombre de propriétés du pneumatique lui-même, par exemple l'endurance de l'armature de carcasse dudit pneumatique, tout en exigeant une armature de frettage trop importante.

L'armature de sommet est préférentiellement formée de deux nappes de fils ou câbles parallèles entre eux dans chaque nappe et croisés d'une nappe à la suivante en faisant avec la direction circonférentielle un angle compris entre 50° et 75°. Les câbles ou fils sont avantageusement textiles pour des raisons de légèreté, de souplesse et de bonne tenue à la corrosion, et préférentiellement en polyamide aromatique. Les extrémités axiales des deux nappes sont préférentiellement situées sur les flancs de la membrane, de sorte que, si l'on appelle S la largeur axiale maximale de l'armature de carcasse du pneumatique, la largeur des nappes est préférentiellement comprise entre S et 1,30 S.

La membrane torique, conforme à l'invention, peut éventuellement comporter des flancs renforcés chacun par au moins une nappe de fils ou câbles radiaux. Elle peut aussi comprendre, radialement au dessus de l'ensemble armature de sommet-armature de frettage, une bande de support caoutchouteuse, ladite bande pouvant être munie d'éléments en relief, de hauteur au moins égale à 14 mm et délimités par des évidements circonférentiels et/ou transversaux débouchant sur les bords latéraux de ladite bande. Les évidements ci-dessus, qui peuvent être des rainures, ont pour rôle de permettre l'écoulement du gaz de gonflage intérieur lorsque le pneumatique prend effectivement appui sur la membrane torique et de réduire la sensibilité aux perforations de la membrane lors du roulage en mode dégradé.

Il est avantageux que les éléments en relief de la bande de support soient sensiblement tronconiques et forment des rangées circonférentielles de blocs ou plots. Cette forme préférentielle des blocs de la bande permet un volume d'évidements plus important, un écoulement du gaz de gonflage et une répartition des températures dudit gaz plus homogènes.

Ecoulement et répartition sont d'autant plus homogènes que les flancs peuvent être pourvues avantageusement de rainures radiales débouchant sur la jante métallique de montage du pneumatique.

La présence d'évidements ou de rangées circonférentiels permet un autre avantage. En effet, si l'armature de frettage peut être incorporée à la membrane torique et faire partie intégrante de ladite membrane, c'est-à-dire, par exemple disposée sur et/ou sous l'armature de sommet, elle est préférentiellement située sur la face radialement extérieure de la bande de support et se présente sous forme d'une nappe axialement discontinue et formée de plusieurs bandelettes de plusieurs câbles circonférentiels textiles de largeurs sensiblement égales aux largeurs des évidements ou rainures entre rangées d'éléments en relief de la bande de support et disposées dans lesdits évidements ou rainures, de manière indépendante de la bande de support. Cette structure de frettage permet, lorsque la cavité intérieure du pneumatique est dépourvue de gaz de gonflage et par rupture des câbles circonférentiels des bandelettes due au différentiel de pression nettement accru, une expansion plus rapide et plus complète de la membrane torique.

Les caractéristiques et avantages de l'invention seront mieux comprises à l'aide de la description qui suit et qui se réfère au dessin illustrant à titre non limitatif des exemples d'exécution, dessin sur lequel :
- les figures 1A et 1B représentent schématiquement, dans un plan radial perpendiculaire au sol, les sections méridiennes diamétralement opposées d'un ensemble, conforme à l'invention, lorsque le pneumatique est écrasé sous charge et roulant sous des conditions normales,
- les figures 2A et 2B représentent schématiquement, de la même manière que sur la figure 1, les sections méridiennes de l'ensemble soumis au roulage en mode dégradé,
- la figure 3 représente schématiquement, vu en section méridienne, un ensemble roulant, conforme à l'invention, selon une première variante préférentielle,
- la figure 4 représente schématiquement, vu en section méridienne, un ensemble selon une deuxième variante préférentielle.

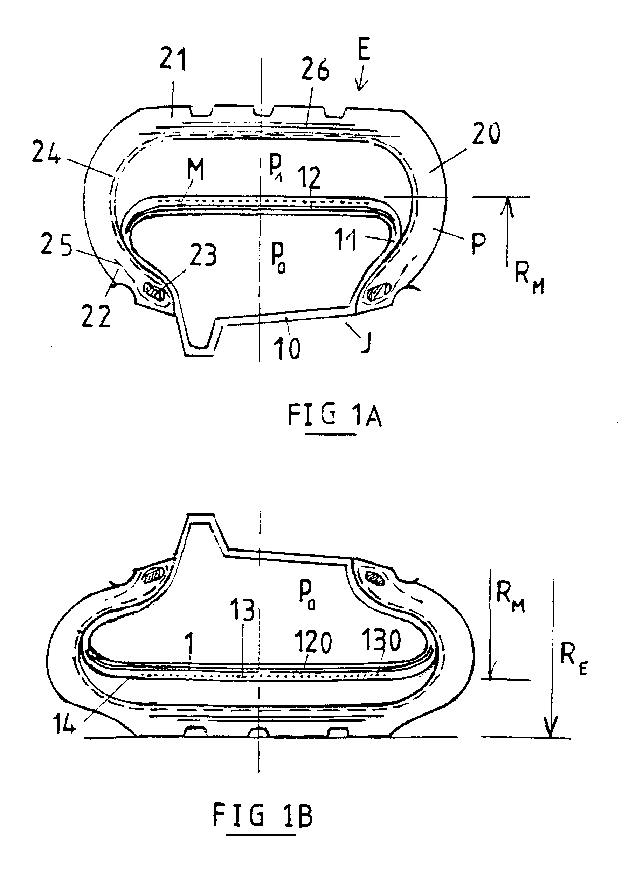

Sur la figure 1A, l'ensemble E est composé du pneumatique P, de dimension 495/45-R-22.5 dans l'exemple décrit, de la jante de montage J, et de la membrane torique M conforme à l'invention. Le pneumatique P est un pneumatique universellement connu, avec des flancs (20) réunis radialement à l'extérieur à une bande de roulement (21) et prolongés radialement à l'intérieur à deux bourrelets(22), chaque bourrelet (22) étant renforcé par au moins une tringle (23) autour de laquelle vient s'ancrer une armature de carcasse radiale (24) pour former des retournements (25). Ladite armature de carcasse (24) est surmontée radialement dans le sommet par une armature de sommet (26), composée d'au moins deux nappes de fils ou câbles métalliques parallèles entre eux dans chaque nappe et croisés d'une nappe à la suivante en faisant avec la direction circonférentielle un angle pouvant être compris entre 5° et 45°. Le pneumatique P est dit sans chambre, et comprend intérieurement une couche de mélange de caoutchouc imperméable aux gaz de gonflage.

La jante J, dite 17.00 x 22.5 et sur laquelle est monté le pneumatique P est une jante de type connu.

Quant à la membrane torique M, conforme à l'invention, elle est, dans l'exemple décrit, fermée et renforcée en son sommet (1). D'épaisseur constante sur sa partie radialement intérieure (10) et sur ses flancs (11), elle est plus épaisse au sommet (1) et est renforcée d'une part par un armature de sommet (12) composée de deux nappes (120) de câbles en polyester, parallèles entre eux dans chaque nappe avec un pas correspondant à 102 câbles par dm, et croisés d'une nappe à la suivante en faisant avec la ligne équatoriale XX' de l'ensemble un angle égal à 60°. La largeur des nappes est plus grande que la largeur axiale maximale du pneumatique de 6% environ. Cette armature de sommet (12), facilement expansible, est associée à une armature de frettage (13), radialement à l'extérieur dans l'exemple décrit et composée d'une seule nappe (130) de câbles orientés circonférentiellement, lesdits câbles étant en polyamide aromatique et formés de trois fils de 330 TEX, et posés avec une densité de 10 câbles par dm. Ladite nappe de câbles présente une courbe force de traction par cm de nappe (perpendiculairement à la direction des câbles) en fonction de l'allongement relatif F cm = f(ε) ayant une pente relativement élevée pour une force comprise entre 0 et la force de rupture de 145.daN par câble. La nappe (13) de câbles circonférentiels ainsi définis assure la fonction de frettage de la membrane M, frettage d'une part contre les efforts dus à la force centrifuge et d'autre part contre les efforts dus au différentiel de pression p₀ - p₁, p₀ étant la pression de gonflage de la membrane torique M, égale à 9,5.10⁵ Pa, et p₁ étant la pression du pneumatique P égale à 9,0.10⁵ Pa. Ladite fonction de frettage permet à la membrane M de conserver, dans les conditions normales de roulage de l'ensemble, c'est-à-dire dans les conditions de charge, de pression et de vitesse recommandées pour le pneumatique concerné, un rayon R_{M} pratiquement constant et inférieur au rayon R_{E} écrasé du pneumatique P (figure 1B représentant la partie écrasée de l'ensemble dans les conditions normales de roulage).

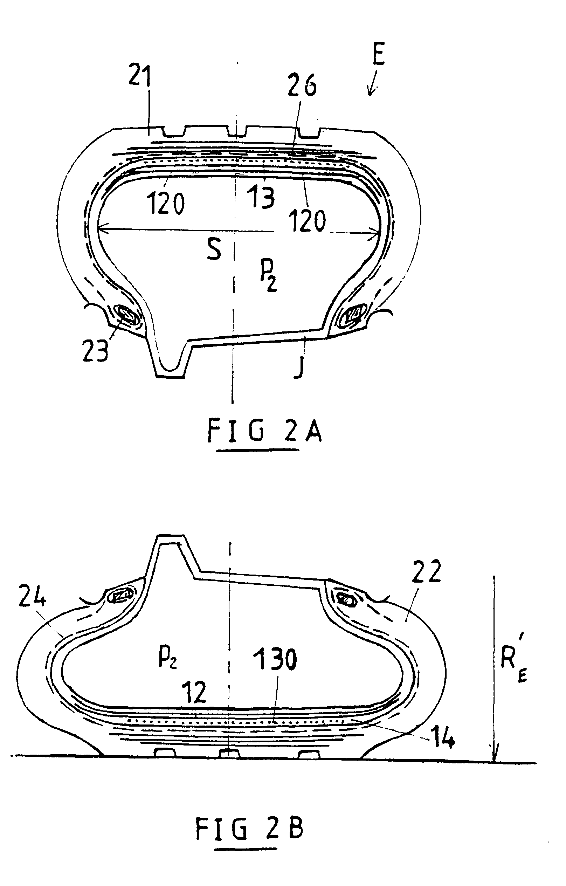

La membrane M est complétée par le recouvrement de l'armature de frettage (13) par une couche de mélange de caoutchouc (14) d'épaisseur faible et égale à 0,6 mm. Il est alors avantageux, pour éviter les perforations de la membrane torique, de disposer à l'intérieur de cette dernière une couche de produit semi-pâteux et auto-obturant. Lorsque le pneumatique P perd de la pression interne, de manière lente ou subite et quelle que soit la raison de ladite perte de pression (p₁ décroît), le différentiel de pression p₀ - p₁ devient tel que les câbles de la nappe (130) rompent et permettent ainsi l'expansion de la membrane torique M jusqu'à occupation complète de la cavité du pneumatique P (figures 2A et 2B). L'augmentation de volume entraînant une diminution de la pression intérieure p₀ initiale de la membrane M, l'ensemble roulant opère sous une pression p₂ inférieure, conduisant à un rayon écrasé R'_{E} en roulage en mode dégradé (figure 2B) inférieur au rayon écrasé R_{E} en roulage normal figure 1B). Le rayon R'_{E} permet cependant un roulage à vitesse modérée jusqu'à la prochaine aire d'entretien sans dégradation majeure du pneumatique P et sans intervention humaine, aire d'entretien où il est alors possible d'apporter le supplément de pression nécessaire pour obtenir un rayon très voisin du rayon R_{E} et permettre un roulage sous des conditions pratiquement normales, la vitesse du véhicule devant cependant être réduite légèrement du fait des échauffements de l'ensemble sensiblement supérieurs.

Il va de soi qu'un tel système de sauvegarde est indissociable d'une information reportée au tableau de bord du véhicule, signalant à son conducteur le pneumatique en défaut.

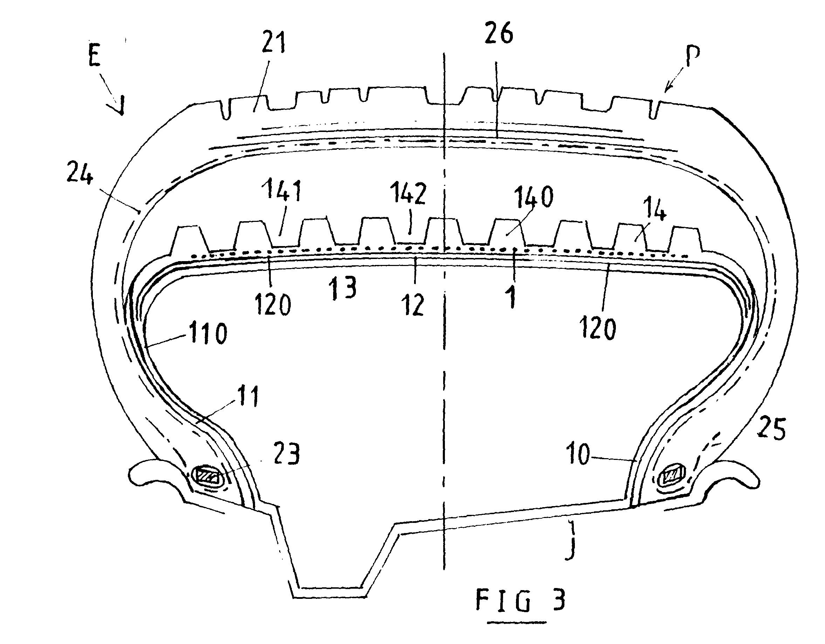

La variante de membrane torique M, représentée sur la figure 3, diffère de la membrane montrée sur les figures 1 et 2, par les points suivants :
a) la couche (14) de mélange de caoutchouc recouvrant les armatures de sommet et de frettage est nettement plus épaisse, épaisseur égale à 21 mm. Elle est en outre sculptée, munie de rainures circonférentielles (142) d'une part et transversales (141) d'autre part, lesdites rainures délimitant entre elles des blocs (140) de caoutchouc. Ces rainures ont une profondeur h égale à 20 mm, et une largeur comprise entre 10 mm et 14 mm ;
b) les flancs (11) de la membrane sont eux aussi épaissis et rainurés par des évidements radiaux (110), lesdits évidements occupant une surface sensiblement comprise entre 40% et 60% de la surface totale des flancs (11), et débouchant sur la jante métallique J de l'ensemble E, ce qui permet un meilleur acheminement des calories produites vers la jante J et une meilleure déperdition desdites calories.

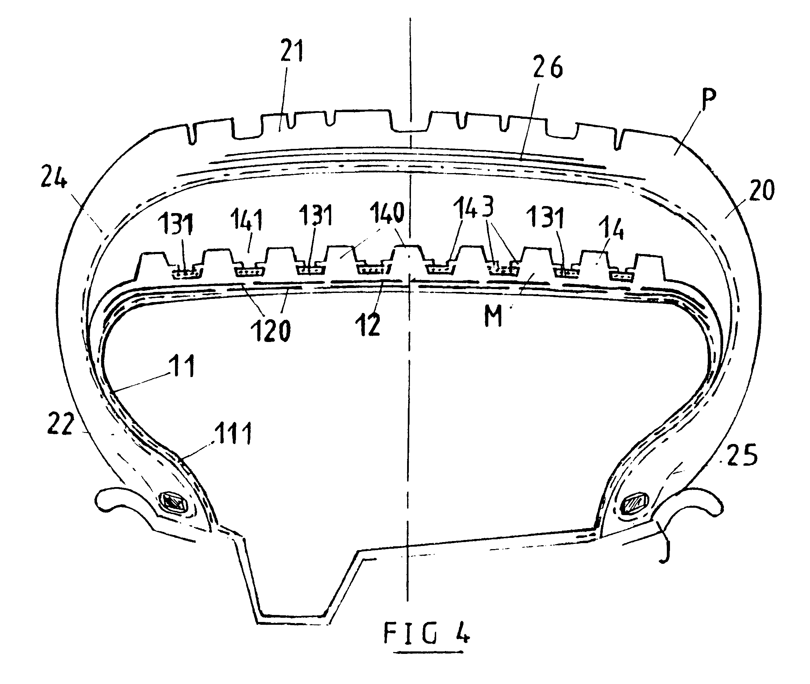

La membrane torique fermée M, montrée sur la figure 4, insérée dans le même pneumatique P que précédemment, comprend aussi un sommet (1) renforcé par deux nappes (120) de câbles croisés, une couche ou bande de recouvrement (14), et des flancs (11). Elle présente les particularités suivantes :
1) la bande de roulement (14) est munie d'éléments en relief tronconiques (140) séparés entre eux par des évidements (141). Ces "plots" tronconiques, comme pourraient l'être des éléments en relief circonférentiels et continus, sont munis latéralement de saillies ou ergots (143) de petites dimensions, et forment sur la surface de la bande (14) des rangées circonférentielles, de sorte que
2) entre deux rangées de plots (140) axialement adjacentes, est disposée une bandelette de frettage (131) de câbles circonférentiels, possédant la propriété d'avoir une force de rupture par cm au plus égale à 600 daN. Le nombre de bandelettes (131), égal au nombre d'intervalles axiaux entre rangées de plots (140) remplace fonctionnellement la nappe (130) montrée sur la figure 3. Lesdites bandelettes (131), étant à l'extérieur de la membrane M proprement dite, évitent, comme dans le cas des câbles guipés, la présence de multiples ruptures, avec l'avantage fondamental que ces bandelettes (131), non seulement permettent un kilométrage plus important en mode dégradé mais aussi l'utilisation ultérieure de la membrane M après remplacement desdites bandelettes (131). Les ergots (143) permettent de maintenir lesdites bandelettes (131) en place dans les intervalles entre rangées de plots, d'une part lors de l'opération de mise en place de la membrane dans le pneumatique, et d'autre part lors de la rupture des câbles circonférentiels des bandelettes, .
3) la membrane M étant dans cet exemple appelée à servir plusieurs fois, chaque flanc (11) de ladite membrane est renforcée par une nappe (111) de câbles radiaux, l'extrémité radialement supérieure de ladite nappe étant radialement à l'extérieur de l'extrémité de l'armature (12) de sommet de ladite membrane.

Les moyens de soutien de bande de roulement après dégonflement du pneumatique peuvent utiliser différentes possibilités permettant de maîtriser les opérations de gonflage et dégonflage du pneumatique d'une part, de la membrane d'autre part. On peut utiliser deux valves, l'une permettant le gonflage de la membrane M, l'autre étant raccordé à un tube flexible cheminant dans la cavité de la membrane M, et débouchant dans la cavité pneumatique. Cette deuxième valve peut aussi débiter l'air de gonflage dans l'un des évidements radiaux (110) prévus sur les flancs (11) de la membrane M.

## Revendications

1. Ensemble roulant E pour véhicules, formé par une membrane torique M en caoutchouc renforcé, utilisée comme moyen de support de la bande de roulement d'un pneumatique P sans chambre à air, par ledit pneumatique P et sa jante de montage J, ledit ensemble roulant E permettant de pouvoir rouler lorsque ledit pneumatique P est sujet à une perte de pression interne, **caractérisée en ce que**, ladite membrane M étant gonflée à une pression p₀ supérieure à la pression p₁ de la cavité du pneumatique P, elle a, à l'état gonflé, un rayon de sommet R_{M} inférieur au rayon écrasé R_{E} du pneumatique utilisé à sa pression recommandée, ladite membrane M étant au moins en son sommet (1) renforcée par une armature de sommet (12) formée d'au moins une nappe (120) de fils ou câbles parallèles entre eux dans chaque nappe et faisant avec la direction circonférentielle un angle α tel que 50° ≤ α ≤ 90°, ledit sommet (1) de ladite membrane M comprenant en outre une armature de frettage (13) composée d'au moins une nappe (130) de fils ou câbles orientés circonférentiellement et présentant une force de rupture par cm de nappe d'une part au moins égale au produit du rayon de sommet R_{M} par la pression, par cm² de surface de ladite nappe, conduisant à une tension par cm de nappe égale à la tension correspondante à la force centrifuge maximale à laquelle peut être soumis le pneumatique d'autre part au plus égale au rayon de sommet de ladite nappe par la pression p₁.de sorte que les fils ou câbles se rompent lorsque la différence de pression p₀- p₁ croît suite à la décroissance de p₁.

2. Ensemble roulant E selon la revendication 1, **caractérisée en ce que** la nappe (130) de fils ou câbles orientés circonférentiellement présente une force de rupture par cm de nappe, égale au produit du rayon de sommet de ladite nappe par une fonction linéaire de la pression de gonflage p₁ du pneumatique, dont le coefficient angulaire étant compris entre 0,05 et 0,5 et l'ordonnée à l'origine est la valeur de la pression correspondante à la force centrifuge maximale.

3. Ensemble roulant E selon la revendication 2, **caractérisée en ce que** l'ordonnée à l'origine de la fonction linéaire est égale à 0,3. 10⁵ Pa pour la gamme de pneumatiques dits "Poids-Lourds".

4. Ensemble roulant E selon la revendication 1, **caractérisée en ce que** la membrane M est fermée, sa section transversale présentant un contour continu.

5. Ensemble roulant E selon la revendication 2, **caractérisée en ce que** l'armature de sommet (12) comprend deux nappes (120) de fils ou câbles textiles, en polyamide aromatique, parallèles entre eux dans chaque nappe et croisés d'une nappe à la suivante en faisant avec la direction circonférentielle un angle compris entre 50° et 75°.

6. Ensemble roulant E selon la revendication 5, **caractérisée en ce que** les extrémités axiales des deux nappes (120) sont préférentiellement situées sur les flancs (11) de la membrane M, de sorte que, si l'on appelle S la largeur axiale maximale du pneumatique, les largeurs des nappes (120) sont préférentiellement comprises entre S et 1,30 S.

7. Ensemble roulant E selon la revendication 6, **caractérisée en ce que** la membrane M comprend, radialement au dessus de l'ensemble armature de sommet-armature de frettage, une bande de support caoutchouteuse (14), ladite bande pouvant être munie d'éléments en relief (140) de hauteur au moins égale à 14 mm et délimités par des évidements circonférentiels (141) et/ou transversaux (142) débouchant sur les bords latéraux de ladite bande.

8. Ensemble roulant E selon la revendication 7, **caractérisée en ce que** les éléments en relief (140) de la bande de support (14) sont sensiblement tronconiques et forment des rangées circonférentielles (141) de blocs ou plots.

9. Ensemble roulant E selon l'une des revendications 7 ou 8, **caractérisée en ce que** les éléments en relief (140) de la bande de support (14) sont munis latéralement de saillies ou ergots (143).

10. Ensemble roulant E selon la revendication 1, **caractérisée en ce que** l'armature de frettage (13) est intégrée au sommet (1) de la membrane M.

11. Ensemble roulant E selon l'une des revendications 8 ou 9, **caractérisée en ce que** l'armature de frettage (13) est préférentiellement située sur la face radialement extérieure de la bande de support (14) et se présente sous forme d'une nappe axialement discontinue et formée de plusieurs bandelettes (130) de plusieurs câbles circonférentiels textiles, de largeurs sensiblement égales aux largeurs des évidements ou rainures (141) entre rangées d'éléments en relief (140) de la bande de support (14) et disposées dans lesdits évidements ou rainures (141), de manière indépendante de la bande de support (14).

12. Ensemble roulant E selon la revendication 1, **caractérisée en ce que** les flancs (11) sont renforcés par au moins une nappe (111) de fils ou câbles radiaux.

13. Ensemble roulant E selon la revendication 1, **caractérisée en ce que** les flancs (11) sont pourvues de rainures radiales (110) débouchant sur la jante métallique J de montage du pneumatique, et permettant l'écoulement de gaz.

14. Ensemble roulant E pour véhicules, destiné à pouvoir rouler après une perte de pression conséquente et inattendue du pneumatique P de l'ensemble, ledit pneumatique étant plus particulièrement un pneumatique sans chambre de type Poids-Lourd dont le rapport de forme H/B est au plus égal à 0,8, et comportant outre le pneumatique P, la jante de montage J, et une membrane torique M selon l'une des revendications 1 à 13, **caractérisé en ce que** la pression intérieure p₀ de la membrane M, mesurée à froid, c'est-à-dire à 20° C, est supérieure à la pression p₁ de la cavité interne du pneumatique d'une quantité comprise entre 0,05 et 0,50 p₁.

## Patentansprüche

1. Rollende Baugruppe E für Fahrzeuge, gebildet aus einer torusförmigen Membran M aus verstärktem Gummi, die als Abstützmittel für die Lauffläche eines Reifens P ohne Luftkammer benutzt wird, aus dem genannten Reifen P und seiner Montagefelge J, wobei es die genannte rollende Baugruppe E gestattet, noch rollen zu können, wenn der genannte Reifen P einem inneren Druckverlust unterzogen ist, **dadurch gekennzeichnet, daß** die genannte Membran M auf einen Druck p₀ aufgepumpt ist, der höher ist als der Druck p₁ des Hohlraums des Reifens P, die im aufgepumptem Zustand einen Scheitelradius R_{M} hat, der kleiner ist als der eingedrückte Radius R_{E} des Reifens, der bei seinem empfohlenen Druck verwendet wird, wobei die genannte Membran M mindestens an ihrem Scheitel (1) durch eine Scheitelbewehrung (12) verstärkt ist, die aus mindestens einer Lage (120) aus Drähten oder Seilen gebildet ist, die in jeder Lage zueinander parallel verlaufen und zur Umfangsrichtung einen Winkel α bilden, so daß 50° ≤ α ≤ 90° ist, wobei der genannte Scheitel (1) der genannten Membran M außerdem eine Umschnürungsbewehrung (13) aufweist, die aus mindestens einer Lage (130) aus Drähten oder Seilen zusammengesetzt ist, die in Umfangsrichtung ausgerichtet sind und eine Bruchkraft pro cm der Lage darbieten, die einerseits mindestens gleich ist dem Produkt des Scheitelradius R_{M} mit dem Druck pro cm² der Oberfläche der genannten Lage, was zu einer Spannung pro cm der Lage führt, die äquivalent ist der Spannung, die der maximalen Fliehkraft entspricht, der der Reifen unterzogen werden kann, und andererseits höchstens gleich ist dem Scheitelradius der genannten Lage mal dem Druck p₁, und zwar derart, daß die Drähte oder Seile brechen, wenn die Druckdifferenz p₀-p₁ infolge der Abnahme von p₁ zunimmt.

2. Rollende Baugruppe E nach Anspruch 1, **dadurch gekennzeichnet, daß** die Lage (130) aus Umfangsdähten oder -seilen eine Bruchkraft pro cm der Lage aufweist, die gleich ist dem Produkt des Radius des Scheitels der genannten Lage mit einer linearen Funktion des Aufpumpdruckes p₁ des Reifens, wovon der Winkelbeiwert zwischen 0,05 und 0,5 liegt und die Ordinate vom Ursprung aus der Wert des Drukkes ist, der der maximalen Fliehkraft entspricht.

3. Rollende Baugruppe E nach Anspruch 2, **dadurch gekennzeichnet, daß** die Ordinate vom Ursprung der linearen Funktion für den Bereich der sogenannten "Schwerlastreifen" 0,3.10⁵ Pa beträgt.

4. Rollende Baugruppe E nach Anspruch 1, **dadurch gekennzeichnet, daß** die Membran M geschlossen ist und ihr Querschnitt eine durchgehende Kontur darbietet.

5. Rollende Baugruppe E nach Anspruch 2, **dadurch gekennzeichnet, daß** die Scheitelbewehrung (12) zwei Lagen (120) aus Textildrähten oder -Seilen aus aromatischem Polyamid aufweist, die in jeder Lage zueinander parallel und von einer zur folgenden Lage überkreuz verlaufen, wobei sie zur Umfangsrichtung einen Winkel bilden, der zwischen 50° und 75° liegt.

6. Rollende Baugruppe E nach Anspruch 5, **dadurch gekennzeichnet, daß** die axialen Enden der beiden Lagen (120) bevorzugt auf den Flanken (11) der Membran M derart gelegen sind, daß, wenn man die axiale maximale Breite des Reifens S nennt, die Breiten der Lagen (120) bevorzugt zwischen S und 1,30 S liegen.

7. Rollende Baugruppe E nach Anspruch 6, **dadurch gekennzeichnet, daß** die Membran M radial über der Baugruppe aus Scheitelbewehrung und Umschnürungsbewehrung ein gummihaltiges Abstützband (14) aufweist, und daß das genannte Band mit reliefartigen Elementen (140) mit einer Höhe von mindestens 14 mm versehen sein kann, die durch Umfangs-Ausnehmungen (141) und/oder Querausnehmungen (142) begrenzt sind, die auf den seitlichen Rändern des genannten Bandes einmünden.

8. Rollende Baugruppe E nach Anspruch 7, **dadurch gekennzeichnet, daß** die reliefartigen Elemente (140) des Abstützbandes (14) im wesentlichen kegelstumpfförmig sind und Umfangsreihen (141) aus Blökken oder Klötzen bilden.

9. Rollende Baugruppe E nach einem der Ansprüche 7 oder 8, **dadurch gekennzeichnet, daß** die reliefartigen Elemente (140) des Abstützbandes (14) seitlich mit Vorsprüngen oder Nocken (143) versehen sind.

10. Rollende Baugruppe E nach Anspruch 1, **dadurch gekennzeichnet, daß** die Umschnürungsbewehrung (13) in den Scheitel (1) der Membran M integriert ist.

11. Rollende Baugruppe E nach eine der Ansprüche 8 oder 9, **dadurch gekennzeichnet, daß** die Umschnürungsbewehrung (13) bevorzugt auf der radial äußeren Fläche des Abstützbandes (14) gelegen ist und sich in Form einer axial nicht-durchgehenden Lage darbietet, die aus mehreren Streifen (130) aus mehreren Textil-Umfangsseilen gebildet ist, mit Breiten, die gleich sind den Breiten der Ausnehmungen oder Rillen (141) zwischen den Reihen aus Entlastungselementen (140) des Abstützbandes (14), und die zwischen den genannten Ausnehmungen oder Rillen (141) unabhängig vom Abstützband (14) angeordnet sind.

12. Rollende Baugruppe E nach Anspruch 1, **dadurch gekennzeichnet, daß** die Flanken (11) durch mindestens eine Lage (111) aus radialen Drähten oder Seilen verstärkt sind.

13. Rollende Baugruppe E nach Anspruch 1, **dadurch gekennzeichnet, daß** die Flanken (11) mit radialen Rillen (110) versehen sind, die auf der Metall-Montagefelge J des Reifens einmünden und das Abfließen von Gas gestatten.

14. Rollende Baugruppe E für Kraftfahrzeuge, die dazu bestimmt ist, nach dem konsequenten und unerwarteten Druckverlust des Reifens P der Anordnung noch rollen zu können, wobei der genannte Reifen mehr im einzelnen ein Reifen ohne Kammer nach Art eines Schwerlastreifens ist, dessen Formverhältnis H/B höchstens 0,8 beträgt, und die außerdem den Reifen P, die Montagefelge J und eine torusförmige Membran M nach einem der Ansprüche 1 bis 13 aufweist, **dadurch gekennzeichnet, daß** der Innendruck p₀ der Membran M, in kaltem Zustand, das heißt, bei 20° C gemessen, um ein Maß höher ist als der Druck p₁ des Innenhohlraums des Reifens, das zwischen 0,05 und 0,50 p₁ liegt.

## Claims

1. A rolling assembly E for vehicles, formed by a toric membrane M of reinforced rubber, used as a supporting means for the tread of a tubeless tyre P, by said tyre P and its mounting rim J, said rolling assembly E making it possible to travel when said tyre P is subject to a loss of internal pressure, **characterised in that**, said membrane M being inflated to a pressure p₀ greater than the pressure p₁ of the cavity of the tyre P, it has, in the inflated state, a crown radius R_{M} less than the loaded radius R_{E} of the tyre used at its recommended pressure, said membrane M being reinforced, at least in its crown (1), by a crown reinforcement (12) formed of at least one ply (120) of cords or cables which are parallel to one another in each ply and form an angle α with the circumferential direction such that 50° ≤ α ≤ 90°, said crown (1) of said membrane M furthermore comprising a hooping reinforcement (13) composed of at least one ply (130) of cords or cables which are oriented circumferentially and having a breaking force per cm of ply firstly at least equal to the product of the crown radius R_{M} and the pressure, per cm² of surface of said ply, resulting in a tension per cm of ply equal to the corresponding tension at the maximum centrifugal force to which the tyre can be subjected, secondly at most equal to the product of the crown radius of said ply and the pressure p₁, such that the cords or cables break when the difference in pressure p₀ - p₁ increases following the decrease in p₁.

2. A rolling assembly E according to Claim 1, **characterised in that** the ply (130) of circumferentially oriented cords or cables has a breaking force per cm of ply equal to the product of the crown radius of said ply and a linear function of the inflation pressure p₁ of the tyre, the angular coefficient of which is between 0.05 and 0.5 and the ordinate at the origin of which is the value of the corresponding pressure at the maximum centrifugal force.

3. A rolling assembly E according to Claim 2, **characterised in that** for the range of so-called heavy-vehicle tyres, the ordinate at the origin of the linear function is equal to 0.3 x 10⁵ Pa.

4. A rolling assembly E according to Claim 1, **characterised in that** the membrane M is closed, its cross-section having a continuous contour.

5. A rolling assembly E according to Claim 2, **characterised in that** the crown reinforcement (12) comprises two plies (120) of textile cords or cables made of aromatic polyamide which are parallel to one another in each ply and crossed from one ply to the next, forming an angle of between 50° and 75° with the circumferential direction.

6. A rolling assembly E according to Claim 5, **characterised in that** the axial ends of the two plies (120) are preferably located on the sidewalls (11) of the membrane M, such that, if S is the maximum axial width of the tyre, the widths of the plies (120) are preferably between S and 1.30 S.

7. A rolling assembly E according to Claim 6, **characterised in that** the membrane M comprises, radially above the crown reinforcement/hooping reinforcement assembly, a rubber supporting strip (14), said strip possibly being provided with elements in relief (140), of a height of at least 14 mm and defined by circumferential (141) and/or transverse (142) cutouts opening on to the lateral edges of said strip.

8. A rolling assembly E according to Claim 7, **characterised in that** the elements in relief (140) of the supporting strip (14) are substantially frustoconical and form circumferential rows (141) of blocks or studs.

9. A rolling assembly E according to one of Claims 7 or 8, **characterised in that** the elements in relief (140) of the supporting strip (14) are provided laterally with protrusions or lugs (143).

10. A rolling assembly E according to Claim 1, **characterised in that** the hooping reinforcement (13) is integrated in the crown (1) of the membrane M.

11. A rolling assembly E according to one of Claims 8 or 9, **characterised in that** the hooping reinforcement (13) is preferably located on the radially outer face of the supporting strip (14), and is in the form of an axially discontinuous ply formed of several bands (130) of several circumferential textile cables, of widths substantially equal to the widths of the cutouts or grooves (141) between rows of elements in relief (140) of the supporting strip (14) and arranged in said cutouts or grooves (141), independently of the supporting strip (14).

12. A rolling assembly E according to Claim 1, **characterised in that** the sidewalls (11) are reinforced by at least one ply (111) of radial cords or cables.

13. A rolling assembly E according to Claim 1, **characterised in that** the sidewalls (11) are provided with radial grooves (110) which open on to the metal mounting rim J of the tyre, and permit the flow of gas.

14. A rolling assembly E for vehicles, which is intended to be able to travel after a consequent and unexpected loss of pressure of the tyre P of the assembly, said tyre being more particularly a tubeless tyre of the heavy-vehicle type, the H/B form ratio of which is at most equal to 0.8, and comprising, in addition to the tyre P, the mounting rim J and a toric membrane M according to one of Claims 1 to 13, **characterised in that** the internal pressure p₀ of the membrane M, measured in the cold state, that is to say at 20°C, is greater than the pressure p₁ of the inner cavity of the tyre by a quantity of between 0.05 and 0.50 p₁.
